# EUROPÄISCHE PATENTSCHRIFT

(11) **EP 1 154 236 B1**
(45) Veröffentlichungstag und Bekanntmachung des Hinweises auf die Patenterteilung: **06.05.2009**
(21) Anmeldenummer: 01111027.7
(22) Anmeldetag: 08.05.2001
(51) Int. Cl.: G01C 23/00

(54) **Flugführungsanzeiger**
Flight guidance display
Affichage d'informations de guidage de vol

(30) Priorität: 10.05.2000 DE 10022820
(43) Veröffentlichungstag der Anmeldung: 14.11.2001
(73) Patentinhaber: EADS Deutschland GmbH, 81663 München (DE)
(72) Erfinder: Knoll, Alexander, Dr., 81247 München (DE)

(56) Entgegenhaltungen:
- EP-A- 0 874 222
- US-A- 5 296 854
- US-A- 5 420 582
- WILLIAMS J A ET AL: "Effects of integrated flight path and terrain displays on controlled flight into terrain" PROCEEDINGS OF THE INTERNATIONAL CONFERENCE ON SYSTEMS, MAN AND CYBERNETICS. LE TOUQUET, OCT. 17 - 20, 1993, NEW YORK, IEEE, US, Bd. 3, 17. Oktober 1993 (1993-10-17), Seiten 709-714, XP010132080 ISBN: 0-7803-0911-1

## Beschreibung

Die Erfindung betrifft eine Flugführungsanzeige, die sowohl für das Cockpit eines bemannten Flugzeugs als auch für eine Bodenstation geeignet ist, die ein unbemanntes Flugzeug steuert. Dabei dient die erfindungsgemäße Flugführungsanzeige zur Ansteuerung eines Zielpunkts, der ein Wegpunkt, eine Landebahn- oder ein Lastabsetzort sein kann, in einer vorgegebenen Flugrichtung.

In die Flugzustandsanzeige oder in die Vorwärtssicht integrierte Flugführungsanzeigen nach dem Stand der Technik, wie beispielsweise die in der Zeitschrift "Flying" Ausgabe May 1999, Seite 68 ff oder in Tom Clancy "Fighter Wing", Heyne Verlag München, 1996, Seite 56 beschriebenen Head-Up-Display Darstellungen, verwenden eine schematische Anflug-Grundlinie, wobei die relative Lage dieser Anflug-Grundlinie in der Anzeige, z.B. auf dem Bildschirm, anzeigt, welche Position das zu steuernde Flugzeug relativ zu der geraden Anflug-Grundlinie für einen Zielpunkt hat. Die im Stand der Technik dargestellte Anflug-Grundlinie kann ein Symbol für die Landebahn sein oder für die Endanflug-Richtung, die allgemein auch schräg zur Landebahn verlaufen kann. Die Richtung der Anflug-Grundlinie ist dabei fest vorgeben, dem System bekannt und kann nicht willkürlich vom Piloten verändert werden. Ihre Lage auf der Anzeige ergibt sich aus aktuellen Navigationsdaten. Je nach der Bewegung des Fluggeräts relativ zur betrachteten Anfluglinie des Zielpunkts wandert auch die Anflug-Grundlinie bzw. ihre Symbolik auf der Anzeige nach einer Seite oder nach oben/unten aus.

In die Flugzustandsanzeige oder die Vorwärtsicht integrierte Flugführungs-Anzeigen nach dem Stand der Technik werden also in der Perspektive der Vorwärtssicht des Piloten bzw. eines fiktiven Beobachters einer Bodenstation, der sich im Cockpit befindet, dargestellt.

Ein Nachteil dieser Darstellungsart ist, daß die Ablage von der Anfluggrundlinie nur einem bestimmten Sektor dargestellt werden kann. Dieser ergibt aus der vorgegebenen Perspektive der Anzeige. In Phasen eines Anflugs, bei denen das Flugzeug zunächst in Gegenrichtung zur Endanflug-Richtung fliegt, muss der Pilot ein zweites Navigations-Display betrachten, um die relative Position und die Flugrichtung des Flugzeugs relativ zur vorgegebenen Endanflug-Richtung einzuschätzen. Er muß daher seinen Blick von z.B. einem Head-Up-Display abwenden. Beide Anzeigen müssen vom Piloten dann erst intellektuell verarbeitet werden, bevor er seine relative Position und Flugrichtung zum Zielpunkt bzw. zur Endanflug-Richtung einschätzen kann. Damit geht aber der spezielle Vorteil eines integrierten Displays, die Notwendigkeit nur ein Display betrachten zu müssen um damit alle Flugzustandsinformationen und Navigationsinformationen zu erfassen, verloren. Im Falle eines Head-Up-Displays geht gleichzeitig die Beobachtung der Außensicht verloren.

Die Anzeigen nach dem Stand der Technik bieten deshalb vor allem dann Schwierigkeiten, wenn der Pilot in den letzten Flugphasen vor dem Endanflug noch Abschnitte mit Kurvenflug zu durchfliegen hat.

Es ist daher eine Aufgabe der Erfindung, eine in die Flugzustandsanzeige integrierte Flugführungsanzeige bereitzustellen, die dem Piloten eine Darstellung seiner relativen Position und Flugrichtung in Bezug auf eine vorgegebene Endanflug-Richtung eines Zielpunkts zeigt, ohne die Darstellungsmöglichkeiten der Anzeige auf bestimmte Flugzeug-Positionen zu begrenzen.

Eine weitere Aufgabe der Erfindung ist, z.B. bei unbemannten Flugzeugen, die insbesondere zur Ermöglichung einer Pilotensicht mit einer Kamera ausgerüstet sind, eine in die Vorwärtssicht integrierte Flugführungsanzeige bereitzustellen, deren Darstellung nicht auf den Ausschnitt der Kamera begrenzt ist.

Erfindungsgemäß wird die Position des Flugzeugs relativ zu Zielpunkt und Sollrichtung, d.h. z.B. relativ zur Landebahn und Richtung der Landebahn bzw. der Überflugrichtung an einem vorbestimmten Zielpunkt, über volle 360° um das Flugzeug herum bildlich dargestellt. Findet die erfindungsgemäße Darstellung beispielsweise über ein Head-Up-Display statt, so können gleichzeitig die Sicht nach vorne, der Luftraum mit der Endanflug-Richtung und die momentane Flugrichtung sowie allgemeine Flugführungsgrößen betrachtet werden. Diese Anzeige ist vorteilhaft bei einem Anflug mit Kurvenabschnitten, oder auch in Situationen, bei denen die Landebahn oder der Zielpunkt mit bloßem Auge nicht gesehen werden kann, weil die Relativposition des Flugzeugs dazu ungünstig ist, das Wetter eine Sicht nicht zulässt, oder die Landebahn bzw. der Zielpunkt aus topographischen Gründen verdeckt ist. Bei geringer Sichtweite, wenn z.B. ein Seitenblick auf die Landebahn unmöglich ist, bietet die erfindungsgemäße Flugführungsanzeige eine Darstellung für die relative Position des Flugzeugs und die Flugzeug-Richtung bezogen auf den Zielpunkt. Darüber hinaus wird bei Instrumenten-Anflügen mit Kurvenabschnitten und Anflügen, bei denen die Endanflug-Richtung und die Zielpunkt-Sollrichtung (z.B. die Landebahnrichtung) nicht übereinstimmen, durch die Anzeige der Zielpunkt-Sollrichtung, d.h. der Sollrichtung des Flugzeugs über oder am Zielpunkt, in Verbindung mit der Darstellung der Flugzeug-Richtung relativ zum Zielpunkt eine eindeutige Orientierung ermöglicht.

Die erfindungsgemäße Darstellung ist besonders günstig für den Zeitpunkt, bei dem ein Wechsel von einem Instrumenten-Anflug auf einen richtungsmässig abweichenden Endanflug nach Sichtbedingungen durchzuführen ist, da die erfindungsgemäße Anzeige alle wesentlichen Richtungen in der horizontalen Ebene und die Vorwärtssicht des Piloten miteinander integriert, ohne letztere durch einen fiktiven Blickwinkel einzuschränken.

Vorteilhaft lässt sich die erfindungsgemäße Anzeige auch bei Anflügen anwenden, die eine sehr genaue Navigation nach Außensicht erfordern, wie z.B. bei unbemannten Flugzeugen, die aber gleichzeitig nur einen sehr eingeschränkten Blickwinkel (z.B. durch die Kamera) nach außen bieten.

Diese Aufgaben werden mit den Merkmalen des Anspruchs 1 gelöst. Weitere Ausführungsformen sind in den Unteransprüchen angegeben.

Erfindungsgemäß erfolgt eine Integration der relativen Position und Flugzeug-richtung in Bezug auf den Zielpunkt bzw. die Zielpunkt-Sollrichtung in die Flugzustandsanzeige oder die Vorwärtssicht. Die "Vorwärtssicht" kann dabei eine Head-Up-Display (HUD)-Außensicht, eine Bildschirmdarstellung, eine in ein Visier eingespiegelte Darstellung ("Helmet mounted Display" oder HMD) oder beim unbemannten Flugzeug eine Kamerasicht sein, der üblicherweise auch noch HUD-ähnliche Informationen überlagert werden.

Die Erfindung bezieht sich allgemein auf den Anflug von Zielpunkten oder Orten, z.B. eine Landebahn oder den Aufsetzpunkt einer Landebahn, Bodenziele bei bewaffneten Flugzeugen, Landedecks auf Gebäuden oder Schiffen oder Lastabsetz-Orte.

Im folgenden wird die Erfindung anhand der beigefügten Figuren beschrieben, die zeigen:
- Fig. 1: eine schematische Darstellung eines Anflugs auf eine Landebahn von oben gesehen mit einem letzten Navigations-Wegpunkt, einem Anflug in Gegenrichtung zur Landebahn, einen Kurvenabschnitt, einen Endanflug bis zum Aufsetzen,
- Fig. 2: eine Ausführungsform der erfindungsgemäßen Flugführungsanzeige, wobei das Zentrum der Darstellung die Mitte der Horizontlinie ist und der Bezugspunkt der Bezugslinie des Zielpunkt-Positions-Symbols gleich die Mitte der Abeam-Linie ist, und die Abeam-Richtung gleich der Horizontlinie ist,
- Fig. 3: eine weitere Ausführungsform der erfindungsgemäßen Flugführungsanzeige, bei der das Zentrum der Darstellung das Flugzeug-Symbol ist, die Bezugslinie des Zielpunkt-Positions-Symbols auf das Flugzeug-Symbol bezogen ist und die Abeam-Richtung durch das Flugzeug-Symbol verläuft,

- Fig. 4: eine schematische Darstellung des Flugzeugs, seines Anflugwegs und die Landebahn von oben gesehen, wobei sich das Flugzeug in einer Position befindet, die die Anzeige der Fig. 3 wiedergibt,
- Fig. 5: eine Darstellung der erfindungsgemäßen Flugführungsanzeige in einer Situation, bei der die Landebahn außerhalb des Sichtfelds des Piloten gelegen ist,
- Fig. 6: eine Darstellung der Flugführungsanzeige in einer Situation, bei der sich die Landebahn im Sichtfeld befindet und bei der, als eine weitere Option der erfindungsgemäßen Flugführungsanzeige, die Bezugslinie des Zielpunkt-Positions-Symbols auf den Zielpunkt, z.B. die Landebahn, gerichtet ist,
- Fig. 7: eine Darstellung der erfindungsgemäßen Flugführungsanzeige, bei der das Zentrum der Darstellung das Flugzeug-Symbol ist und die Bezugslinie des Zielpunkt-Positions-Symbols auf das Flugzeug-Symbol gerichtet ist, wobei zwei unterschiedliche Situationen zur Darstellung gebracht sind,
- Fig. 8: eine weitere Ausführungsform der erfindungsgemäßen Flugführungsanzeige, bei der das Zentrum der Darstellung die Mitte der Horizontlinie ist und die Bezugslinie des Zielpunkt-Positions-Symbols ebenfalls auf die Mitte der Horizontlinie gerichtet ist, wobei in dieser Darstellung zum einen eine Situation zur Darstellung kommt, bei der der Zielpunkt hinter dem Flugzeug gelegen ist, und zum anderen eine Situation zur Darstellung gebracht wird, bei der der Zielpunkt vor dem Flugzeug gelegen ist.

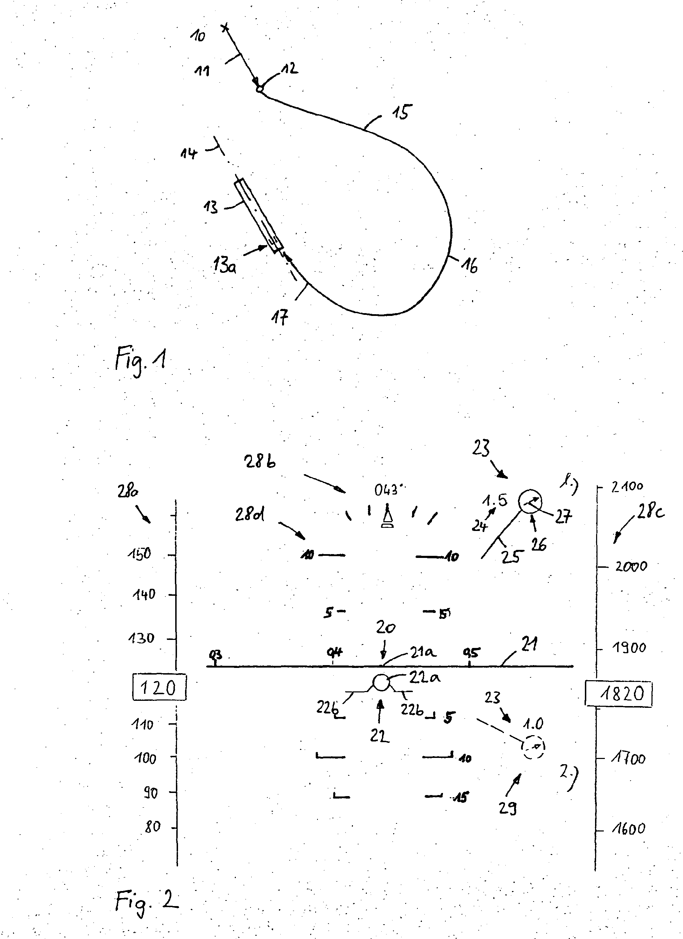

Die Fig. 1 zeigt beispielhaft einen Anflug von oben gesehen, bei dem die erfindungsgemäße Flugführungsanzeige vorteilhaft eingesetzt werden kann. Das Flugzeug (nicht gezeigt) fliegt in einem Streckenflug-Abschnitt 11 auf einen letzten definierten Wegpunkt 12, z.B. ein Funkfeuer, zu, von wo aus der Anflug auf einen Zielpunkt 13a, der wiederum ein Überflugpunkt, ein Abwurfort, ein Landeort und insbesondere der angestrebte Aufsetzpunkt einer Landebahn 13 mit einer Mittellinie 14 sein kann. Der Anflug erfolgt in einem Abschnitt 15 seitlich der Landebahn 13 und entgegen der Landerichtung und führt in einen Kurvenabschnitt 16, auf den der Endanflug 17 bis zum Aufsetzen des Flugzeugs auf der Landebahn 13 erfolgt. Die erfindungsgemäße Flugführungsanzeige gibt den Piloten zu jedem Zeitpunkt des Anflugs eine bildliche Darstellung des Zielpunkts und der Endanflug-Richtung relativ zum Flugzeug und der Flugzeug-Richtung. Unter Flugzeug-Richtung ist dabei die Ausrichtung des Flugzeugs in seiner Längsachse zu sehen, die sich aufgrund der momentanen Windverhältnisse von der Flugrichtung unterscheidet. Ebenso kann in der erfindungsgemäßen Darstellung anstatt der Flugzeug-Richtung gleichwertig auch die Flugrichtung verwendet werden. Im nachfolgenden wird aber beispielhaft nur immer die Flugzeug-Richtung erwähnt.

Die Richtung des Endanflugs 17 muss nicht mit der Richtung der Mittellinie 14 der Landebahn 13 übereinstimmen, sondern kann winklig zu dieser verlaufen. Die erfindungsgemäße Flugführungsanzeige bezieht sich auf den Zielpunkt 13a und optional zusätzlich die angestrebte Richtung im oder am Zielpunkt 13a, die im folgenden kurz Zielpunkt-Sollrichtung genannt wird.

Bei der in der Fig. 2 dargestellten Ausführungsform der erfindungsgemäßen Flugführungs-Anzeige ist das Zentrum der Darstellung 20, sozusagen der Fixpunkt der Darstellung, die Mitte 21a der Horizontlinie 21.

Die Horizontlinie 21 ist die horizontale Richtung vom Flugzeug aus gesehen. In der Flugführungsanzeige nach der Fig. 2 ist weiterhin ein Flugzeugsymbol 22 gezeigt, dessen relative Lage zur Horizontlinie 21 durch die Flugzeug-Richtung relativ zur Horizontalebene bestimmt ist. Je nach Ausführungsform kann dieses Flugzeugsymbol dabei entweder die Flugzeuglage oder den Flugpfadvektor anzeigen. In der, in Fig. 2 dargestellten Situation, würde dies bedeuten, daß entweder das Flugzeug gegenüber der Horizontalebene nach unten, d.h. zum Boden hin gerichtet ist oder aber der Flugweg nach unten zeigt.

Das Flugzeug-Symbol 22 wandert also je nach der Flugzeugrichtung in der Vertikalebene relativ zur Horizontlinie 21 nach oben oder unten. Im Falle eines Flugs im Schiebeflug könnte dieses Flugzeug-Symbol 22, sofern es den Flugpfadvektor anzeigt, auch seitwärts der Mittellinie der Anzeige wandern. Die Lage des Flugzeug-Symbols 22 gegenüber der Horizontallinie 21 wird entweder durch seine Lage im Raum, d.h. Längslagewinkel und Hängewinkel oder durch die Richtung des Flugpfades bestimmt.

Das Flugzeugsymbol 22 weist eine Mitte 22a und seitlich von dieser, in jeweils entgegengesetzten Richtungen, zwei Querlinien 22b auf, die die Flügel des Flugzeugs symbolisieren und deren Lage auf der Anzeige beispielsweise den momentanen Hängewinkel des Flugzeugs anzeigt.

Zusätzlich zu der beschriebenen Darstellung nach dem Stand der Technik ist in der erfindungsgemäßen Flugführungsanzeige weiterhin ein Zielpunkt-Positions-Symbol dargestellt, das in der Darstellung der Fig. 2, 3, 5, 6, 7, 8 das Bezugszeichen 23 hat. Dem Zielpunkt-Positions-Symbol 23 ist eine mit dem Bezugszeichen 24 versehene Maßzahl zugeordnet, die die momentane Entfernung des Flugzeugs vorzugsweise in nautischen Meilen vom Zielpunkt angibt. Das Zielpunkt-Positions-Symbol 23 umfasst erfindungsgemäß eine Bezugslinie 25 und ein Positionssymbol 26, das eine Zielpunkt-Sollrichtungsanzeige 27 umfasst. Diese Zielpunktsollrichtung kann z.B. die Richtung der Landebahn sein. Die Bezugslinie 25 gibt die Flugzeug-Richtung relativ zum Zielpunkt, also z.B. zur Landebahn 13, an. Diese Bezugslinie 25 ist erfindungsgemäß auf das Zentrum der Darstellung gerichtet. Erfindungsgemäß fällt das Zentrum 20 der Darstellung für alle gezeigten Flugzustände und -positionen entweder mit der Mitte 21a der Horizontlinie 21 oder mit der Mitte 22a des Flugzeug-Symbols 22 zusammen. In der Darstellung der Fig. 2 fällt das Zentrum 20 der Darstellung mit der Mitte 21a der Horizontlinie 21 zusammen, so daß die Bezugslinie 25 auf das Zentrum 20 und gleichfalls auf die Mitte 21a der Horizontlinie 21 gerichtet ist.

Das Positionssymbol 26 ist erfindungsgemäß vorzugsweise als Kreis gestaltet, um den Piloten bei der unmittelbaren Auffassung desselben keine Gelegenheit zu geben, eine Richtungsangabe in dieses hinein zu interpretieren. Grundsätzlich kann das Positionssymbol 26 aber auch in anderer geometrischer Form oder als farbig ausgefülltes Feld mit oder ohne Umgrenzungslinie dargestellt werden.

Die Zielpunkt-Sollrichtungsanzeige 27 ist die horizontale Sollrichtung des Endanflugs 17 im Zielpunkt, also z.B. im Aufsetzpunkt der Landebahn. Die Zielpunkt-Sollrichtungsanzeige 27 kann eine Linie oder ein ähnliches Symbol, wie z.B. ein Pfeil wie in der Fig. 2 sein. Durch den Pfeil kann bei bekannter Landerichtung eine Verwechslung mit der Gegenrichtung (Landung auf der gleichen Bahn mit entgegengesetzter Richtung) vermieden werden. Beim Landen fällt in den meisten Fällen diese Zielpunkt-Sollrichtung mit der Richtung der Mittellinie 14 der Landebahn 13 zusammen. Allgemein kann jedoch erfindungsgemäß auch der Fall dargestellt werden, bei dem die Zielpunkt-Sollrichtung schräg zur Mittellinie 14 der Landebahn oder einer Überflugrichtung ist.

Diejenige Richtung, die in der Draufsicht des Flugzeugs bzw. der Vertikalsicht, also der Kartensicht, senkrecht zur Flugzeug-Richtung zu Seite hin ausgerichtet ist, wird im folgenden als "Abeam"-Richtung ("abeam"=querab) bezeichnet. Diese Abeam-Richtung, hängt in der Darstellung von dem Bezugspunkt für die Bezugslinie 25 ab. In der in der Fig. 2 dargestellten Ausführungsform erstreckt sich die Abeam-Richtlinie in Richtung der Horizontlinie 21. Dementsprechend befinden sich hier über der Horizontlinie dargestellte Zielpunkt-Positionssymbole vor dem Flugzeug, bzw. unter der Horizontlinie dargestellte Positionssymbole hinter dem Flugzeug.

Die erfindungsgemäße Flugführungsanzeige kann vorzugsweise noch mit üblichen Angaben zur Geschwindigkeit, zu Höhe und zum Hängewinkel des Flugzeugs versehen sein. So zeigt die Ausführungsform nach der Fig. 2 eine Geschwindigkeitsskala 28a, eine Hängewinkelskala 28b und eine Höhenskala 28c sowie eine Längslagewinkel-Skala 28d.

Im Betrieb wird also bei einem Steig- oder Sinkflug, d.h. bei Drehung des Flugzeugs um die Querachse, die Bezugslinie nach oben oder unten verschoben. Beim Kurvenflug des Flugzeugs , also der Drehung um die Längsachse aus Pilotensicht, wird die Bezugslinie 25 mit dem Positions-Symbol verschwenkt. In der Abeam-Stellung, d.h. wenn die Bezugslinie 25 mit der Horizontlinie 21 übereinstimmt, befindet sich das Ziel genau in seitlicher Richtung des Flugzeugs. Das Zielpunkt-Positions-Symbol 23 befindet sich vorzugsweise im Randbereich des Darstellungsfelds in einem für den Betrachter zur Erkennung der Bezugslinien-Richtung ausreichenden Abstand und in jedem Fall seitlich oder unterhalb oder oberhalb von dessen Bezugspunkt. Optional kann auch vorgesehen sein, dass dieses mit abnehmender Entfernung in Richtung zum Bezugspunkt, d.h. dem Zentrum 20 der Darstellung hinwandert und sich von diesem entfernt, wenn sich das Flugzeug auch vom Zielpunkt entfernt. Mit Randbereich ist dabei der Bereich im wesentlichen außerhalb der Längslagewinkel-Skala 28d gemeint.

In der Fig. 2 ist ein weiteres Zielpunkt-Positions-Symbol 23 in gestrichelter Weise an der Stelle 29 dargestellt und gibt dabei als zusätzliches Beispiel der Darstellung die Position eines Zielpunkts schräg hinter dem Flugzeug an.

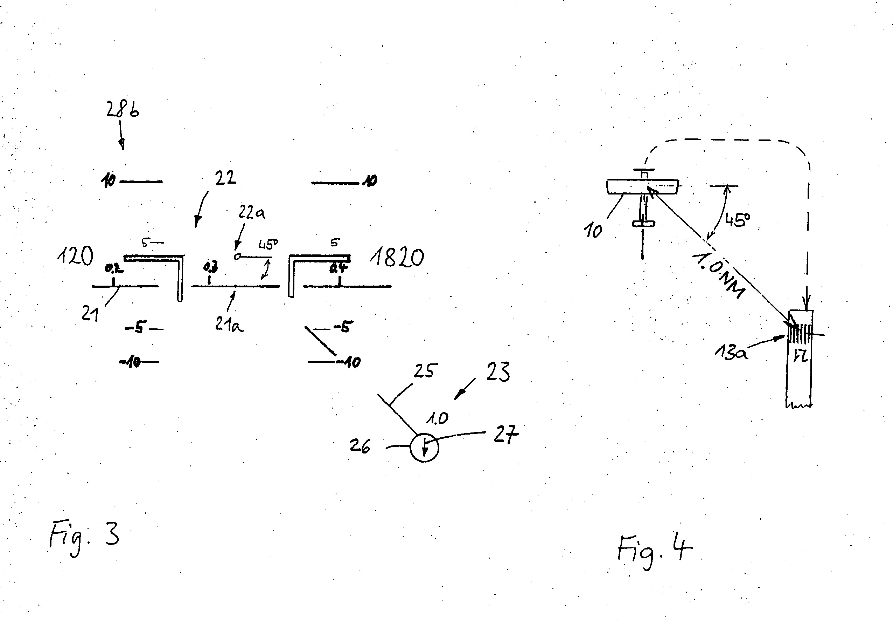

Die Bestandteile der erfindungsgemäßen Flugführungsanzeige, die in den alternativen Ausführungsformen der folgenden Abbildungen 3 bis 8 gleiche Funktionen haben, sind mit denselben Bezugszeichen, wie in der Ausführungsform der Fig. 2 versehen.

Auch die Ausführungsform der Fig. 3 zeigt das Flugzeug-Symbol 22, dessen Mitte mit dem Zentrum 20 der Darstellung in allen Flugsituationen zusammenfällt. Demgegenüber bewegt sich die Horizontlinie 21 relativ zum Zentrum 20 bzw. dem Flugzeug-Symbol 22, je nach dem welche Lage das Flugzeug im Raum einnimmt. Das Zielpunkt-Positions-Symbol 23 mit der Bezugslinie 25 und dem Positionssymbol 26 ist so definiert, dass deren Bezugslinie 25 wiederum durch das Zentrum 20 der Darstellung und in der speziellen Ausführungsform der Fig. 3 durch die Mitte des Flugzeug-Symbols 22 läuft.

In der Situation, die durch die Anzeige der Fig. 3 dargestellt ist, befindet sich der Zielpunkt in Pilotensicht um 45° schräg rechts hinter dem Flugzeug. Zusätzlich zeigt die Zielpunkt-Sollrichtungsanzeige 27 an, dass die Zielpunkt-Sollrichtung genau entgegengesetzt zur momentanen Flugzeug-Richtung ist. Dies wird auch in der zur Fig. 3 gehörigen Darstellung der Fig. 4 dargestellt, die die zugehörige momentane Position des Flugzeugs 10 zu einem Zielpunkt 13a, beispielsweise einer Landebahn 13 zeigt.

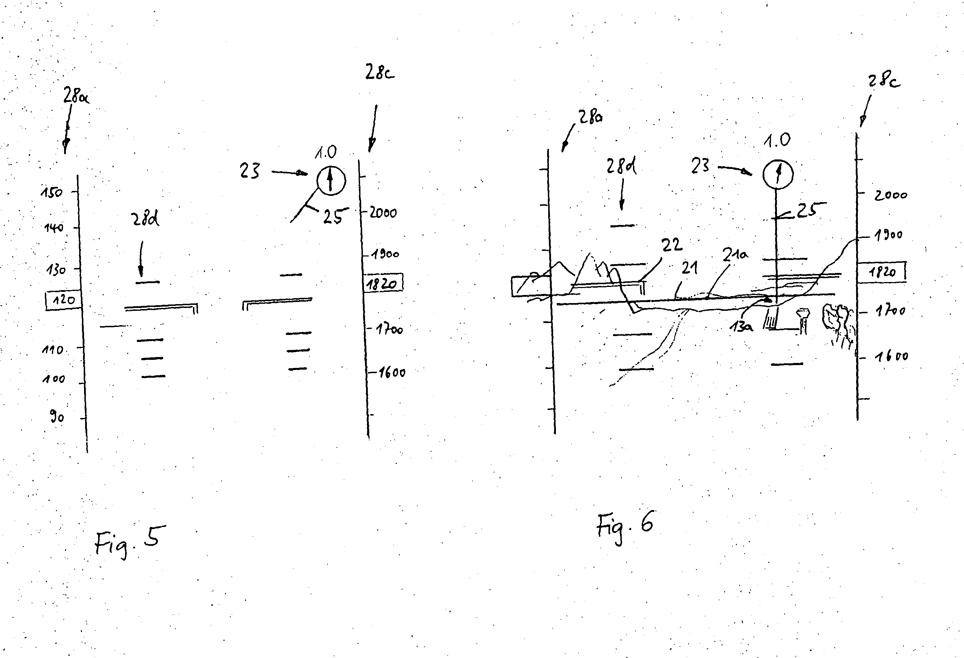

Die Darstellung der Fig. 5 und Fig. 6 zeigt eine Anzeige, wie sie dem Piloten im HUD erscheint, wobei bei der Darstellung der Fig. 5 die Landebahn außerhalb des Sichtfelds des Piloten ist und bei der Darstellung der Fig. 6 die Landebahn in dessen Sichtfeld gelegen ist.

Die erfindungsgemäße Flugführungsanzeige kann optional auch eine Funktion aufweisen, bei der die Bezugslinine 25 auf den Zielpunkt 13a gerichtet ist, sobald der Zielpunkt durch das HUD zu sehen sein müßte, um damit dem Piloten das Finden des Zielpunkts zu erleichtern (Fig. 6). Diese Funktionsart ist für den Piloten daran zu erkennen, daß die Bezugslinie 25 nicht schräg zur Horizontlinie liegt, sondern im Falle einer horizontalen Fluglage in die vertikale Richtung zeigt.

Generell kann die erfindungsgemäße Flugführungsanzeige sowohl auf einem Bildschirm zur Darstellung gebracht werden, als auch mittels eines HUD's in die Sicht des Piloten eingeblendet werden, oder in ein Visier eingespielt werden. Auch alle anderen Kombinationen mit Darstellungstechniken nach dem Stand der Technik sind möglich.

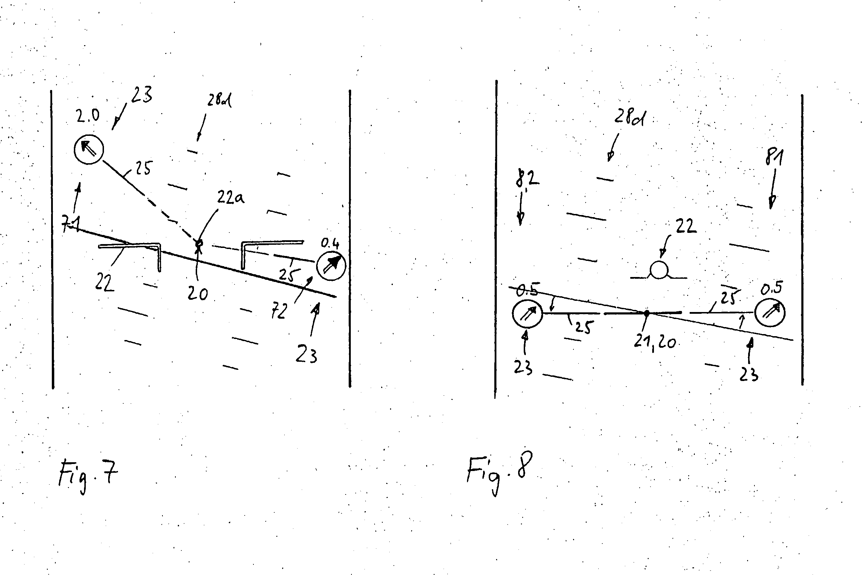

In der Ausführungsform der erfindungsgemäßen Flugführungsanzeige nach der Fig. 7 ist die Bezugslinie 25 des Zielpunkt-Positions-Symbols 23 auf die Mitte des Flugzeug-Symbols 22 gerichtet, die mit dem Zentrum 20 der Darstellung für jede Situation zusammenfällt. Die Horizontlinie 21 befindet sich in der Darstellung gedreht unterhalb der Mitte des Flugzeug-Symbols 22, womit gezeigt ist, daß die Flugzeug-Richtung gegenüber der Horizontalebene nach oben mit einem Hängewinkel ausgerichtet ist. In der Darstellung der Fig. 7 sind beispielhaft zwei Positionen des Zielpunkt-Positions-Symbols 23 eingetragen. Die Position 71 zeigt, dass der Zielpunkt aus Pilotensicht links vor dem Flugzeug ist. Die Richtung des Flugzeugs weicht dabei um 45° von der Sollrichtung am Zielpunkt (z.B. der Landebahnrichtung) ab. Da in dieser Darstellung das Flugzeug-Symbol 22 als Bezugslinie definiert ist, ist die abeam-Position durch die "Flügel" des Flugzeugsymbols bestimmt. Demgemäß besagt Zielpunkt-Positions-Symbol 23 an der Stelle 72, daß der Zielpunkt aus Pilotensicht rechts, leicht hinter dem Flugzeug gelegen ist.

In den Fig. 3, 5, 6, 7 ist das Flugzeug-Symbol aus zwei Teilen gebildet, die jeweils einen Flügel und die Hochachse des Flugzeugs andeuten und die jeweils gegenüber der vertikalen Mittelachse der Darstellung beabstandet und symmetrisch zueinander sind. In den Fig. 2 und 8 ist das Flugzeug-Symbol 22 durch einen Kreis mit zwei davon in entgegengesetzter Richtung ausgehenden und horizontal verlaufenden Linien zur Symbolisierung der Flügel gezeigt. Es lassen sich jedoch auch andere Symbole in die erfindungsgemäße Flugführungsanzeige einsetzen, solange sie auf die Lage der Querachse des Flugzeugs und auf die Lage der Längsachse direkt schließen lassen.

Sowohl die Fig. 7 als auch die Fig. 8 zeigen Situationen, bei denen sich das Flugzeug im Kurvenflug befindet. Bei der erfindungsgemäßen Flugführungs-anzeige wird dies dadurch dargestellt, dass bei gleichbleibender Drehlage des Flugzeug-Symbols 22 die Horizontlinie 21 um ihren Mittelpunkt gedreht wird.

In der Darstellung der Flugführungsanzeige nach der Fig. 8 ist die Bezugslinie 25 auf die Mitte 21a der Horizontlinie bezogen. Aus diesem Grund bedeutet die Lage des Positionssymbols 26 an der Stelle 81, also aus Pilotensicht oberhalb der Horizontlinie 21, daß sich der Zielpunkt aus Pilotensicht rechts leicht vor dem Flugzeug befindet. Das Positionssymbol 26 an der Stelle 82, also unterhalb der Horizontlinie 21, bedeutet, daß der Zielpunkt sich aus Pilotensicht links leicht hinter dem Flugzeug befindet.

Da in der Ausführungsform nach der Fig. 7 die Bezugslinie 25 auf die Mitte 22a des Flugzeug-Symbols 22 gerichtet ist, ist in dieser Ausführungsform für die Frage, ob sich der Zielpunkt aus Pilotensicht vor oder hinter dem Flugzeug befindet, entscheidend, ob die Bezugslinie 25 mit dem Positionssymbol 26 aus Pilotensicht oberhalb oder unterhalb der Querlinie 22b des Flugzeug-Symbols 23 gelegen ist.

Wesentlich ist an der erfindungsgemäßen Flugführungsanzeige, dass die Bezugslinie 25 auf einen Bezugspunkt gerichtet ist, der entweder die Mitte 21a der Horizontlinie 21 oder die Mitte 22a des Flugzeug-Symbols 22 ist. Das Zentrum 20 der Darstellung kann entweder in der Mitte 21a oder in der Mitte 22a oder an einer Stelle oberhalb oder unterhalb eines dieser Punkte gelegen sein. Das Positonssymbol 26 ist optional. Wenn dieses nicht vorgesehen ist, symbolisiert das Ende der Bezugslinie 25, das dem Bezugspunkt fernliegt, den Zielpunkt.

## Patentansprüche

1. Flugführungsanzeige für ein Flugzeug zur Orientierung des Piloten im Anflug (15) des Flugzeugs auf einen Zielpunkt (13a) mit einem Zentrum (20) der Darstellung als ihrem Fixpunkt, mit einem Flugzeug-Symbol (22) mit einer Mitte (22a) zur Darstellung der Längsachse sowie einer Querlinie (22b) zur Darstellung des momentane Hängewinkels des Flugzeugs und einem Zielpunkt-Positions-Symbol (23), das eine Bezugslinie (25) und ein Positionssymbol (26) aufweist, und mit einer Horizontlinie (21) mit einer Mitte (21a), wobei die Horizontlinie (21) gegenüber dem Flugzeug-Symbol (22) gedreht wird, wenn das Flugzeug um denselben Winkel um die Längsachse rotiert,
wobei das Zielpunkt-Positions-Symbol (23) beabstandet vom Zentrum (20) angeordnet ist und dessen Bezugslinien (25) zum Zentrum (20) als Bezugspunkt weist, wobei die Horizontlinie (21) im Bezugspunkt liegt,
wobei das Zielpunkt-Positions-Symbol (23) abhängig von der relativen Lage der Flugzeug-Richtung zur Zielpunkt-Sollrichtung um den Bezugspunkt herum verschwenkt wird.

2. Flugführungsanzeige nach Anspruch 1, **dadurch gekennzeichnet, dass** der Bezugspunkt die Mitte (21 a) der Horizontlinie (21) ist.

3. Flugführungsanzeige nach Anspruch 1, **dadurch gekennzeichnet, dass** der Bezugspunkt die Mitte (22a) des Flugzeug-Symbols (22) ist.

4. Flugführungsanzeige nach einem der voranstehenden Ansprüche, **dadurch gekennzeichnet, dass** das Zielpunkt-Positions-Symbol (23) ein Positionssymbol (26) an dem, dem Bezugspunkt gegenüberliegenden Ende der Bezugslinie (25) aufweist, das die Lage des Zielpunkts (13a) symbolisiert.

5. Flugführungsanzeige nach einem der voranstehenden Ansprüche, **dadurch gekennzeichnet, dass** das Positionssymbol (26) eine Zielpunkt-Sollrichtungsanzeige (27) aufweist, um die Lage der Sollrichtung am Zielpunkt (13a) relativ zur momentanen Flugzeug-Richtung anzuzeigen.

6. Flugführungsanzeige nach dem Anspruch 5, **dadurch gekennzeichnet, dass** die Zielpunkt-Sollrichtungsanzeige (27) ein Pfeil ist, der in Sollrichtung zeigt.

7. Flugführungsanzeige nach einem der voranstehenden Ansprüche, **dadurch gekennzeichnet, dass** das Zielpunk-Positions-Symbol (23) mit einer numerischen Angabe (24) versehen ist, die die Entfernung des Flugzeugs vom Zielpunkt angibt.

8. Flugführungsanzeige nach einem der voranstehenden Ansprüche, **dadurch gekennzeichnet, dass** diese für ein HUD verwendet wird.

9. Flugführungsanzeige nach einem der voranstehenden Ansprüche, **dadurch gekennzeichnet, dass** die Flugführungsanzeige für einen Bildschirm verwendet wird.

10. Flugführungsanzeige nach einem der voranstehenden Ansprüche, **dadurch gekennzeichnet, daß** die Flugführungsanzeige für einen HMD verwendet wird.

## Claims

1. Flight guidance display for an aircraft for orientation of the pilot when the aircraft is approaching (15) the destination point (13a) with a centre (20) of the display as its fixed point, having an aircraft symbol (22) with a centre (22a) in order to represent the longitudinal axis, and having a lateral line (22b) in order to represent the instantaneous bank angle of the aircraft and a destination point position symbol (23), which has a reference line (25) and a position symbol (26) and having a horizon line (21) with a centre (21a) with the horizon line (21) being rotated with respect to the aircraft symbol (22) when the aircraft rotates through the same angle about the longitudinal axis,
with the destination point position symbol (23) being arranged at a distance from the centre (20) and its reference lines (25) pointing to the centre (20) as a reference point, with the horizon line (21) being located at the reference point,
with the destination point position symbol (23) being pivoted about the reference point as a function of the relative attitude of the aircraft direction with respect to the destination point nominal direction.

2. Flight guidance display according to Claim 1, **characterized in that t**he reference point is the centre (21a) of the horizon line (21).

3. Flight guidance display according to Claim 1, **characterized in that t**he reference point is the centre (22a) of the aircraft symbol (22).

4. Flight guidance display according to one of the preceding claims, **characterized in that** the destination point position symbol (23) has a position symbol (26) at the opposite end of the reference line (25) to the reference point, which position symbol (26) symbolizes the position of the destination point (13a).

5. Flight guidance display according to one of the preceding claims, **characterized in that** the position symbol (26) has a destination point nominal direction indication (27) in order to indicate the position of the nominal direction of the destination point (13a) relative to the instantaneous aircraft direction.

6. Flight guidance display according to Claim 5, **characterized in that** the destination point nominal direction indication (27) is an arrow which points in the nominal direction.

7. Flight guidance display according to one of the preceding claims, **characterized in that** the destination point position symbol (23) is provided with a numerical indication (24) which indicates the distance of the aircraft from the destination point.

8. Flight guidance display according to one of the preceding claims, **characterized in that** this display is used for a head-up display.

9. Flight guidance display according to one of the preceding claims, **characterized in that** the flight guidance display is used for a screen.

10. Flight guidance display according to one of the preceding claims, **characterized in that** the flight guidance display is used for a helmet mounted display.

## Revendications

1. Affichage de guidage de vol pour avion, pour orienter le pilote lors de l'approche (15) de l'avion vers un point visé (13a), le centre (20) de la représentation étant son point fixe, avec un symbole (22) de l'avion dont le milieu (22a) représente l'axe longitudinal et une ligne transversale (22b) représente l'angle instantané de lacet de l'avion, un symbole (23) de la position du point visé qui présente une ligne de référence (25) et un symbole de position (26) ainsi qu'une ligne d'horizon (21) dont le milieu est (21a), la ligne d'horizon (21) tournant par rapport au symbole (22) de l'avion si l'avion tourne du même angle autour de l'axe longitudinal,
le symbole (23) de la position du point visé étant disposé à distance du centre (20) et sa ligne de référence (25) pointant vers le centre (20) qui sert de point de référence, la ligne d'horizon (21) étant située au point de référence,
le symbole (23) de position du point visé pivotant autour du point de référence en fonction de la position de la direction de l'avion par rapport à la direction de consigne qui conduit au point visé.

2. Affichage de guidage de vol selon la revendication 1, **caractérisé en ce que** le point de référence est le centre (21a) de la ligne d'horizon (21).

3. Affichage de guidage de vol selon la revendication 1, **caractérisé en ce que** le point de référence est le milieu (22a) du symbole (22) de l'avion.

4. Affichage de guidage de vol selon l'une des revendications précédentes, **caractérisé en ce que** le symbole (23) de la position du point visé présente un symbole de position (26) à l'extrémité de la ligne de référence (25) opposée au point de référence et qui symbolise la position du point visé (13a).

5. Affichage de guidage de vol selon l'une des revendications précédentes, **caractérisé en ce que** le symbole de position (26) présente un affichage (27) de la direction de consigne qui conduit au point visé pour afficher la position de la direction de consigne qui conduit au point visé (13a) par rapport à la direction instantanée de l'avion.

6. Affichage de guidage de vol selon la revendication 5, **caractérisé en ce que** l'affichage (27) de la direction de consigne qui conduit au point visé est une flèche qui est orientée dans la direction de consigne.

7. Affichage de guidage de vol selon l'une des revendications précédentes, **caractérisé en ce que** le symbole (23) de position du point visé est doté d'une indication numérique (24) qui donne la distance entre l'avion et le point visé.

8. Affichage de guidage de vol selon l'une des revendications précédentes, **caractérisé en ce qu'**il est utilisé pour un HUD ("head-up display" - affichage tête haute).

9. Affichage de guidage de vol selon l'une des revendications précédentes, **caractérisé en ce que** l'affichage de guidage de vol est utilisé pour un écran.

10. Affichage de guidage de vol selon l'une des revendications précédentes, **caractérisé en ce que** l'affichage de guidage de vol est utilisé pour un HMD ("head medium display" - affichage à hauteur moyenne).
